# EUROPEAN PATENT APPLICATION

(11) **EP 4 312 426 A1**
(43) Date of publication of application: **31.01.2024**
(21) Application number: 23187315.9
(22) Date of filing: 24.07.2023
(51) Int. Cl.: H04N 9/31

(54) **PROJECTION SYSTEM AND CALIBRATION METHOD THEREOF**

(30) Priority: 29.07.2022 US 202263393239 P; 28.09.2022 CN 202211190384
(71) Applicant: Coretronic Corporation, Hsin-Chu 300 (TW)
(72) Inventor: Chen, Kun-Hong, Hsin-Chu 300 (TW); Liao, Yi-Jun, Hsin-Chu 300 (TW); Hsieh, Yu-Hsuan, Hsin-Chu 300 (TW); Chen, Yun-Shih, Hsin-Chu 300 (TW)
(74) Representative: Ter Meer Steinmeister & Partner

(57) **Abstract**

A projection system (10) includes a projection device (100), a light sensor (200), a control unit (300), and an arithmetic unit (400). The projection device (100) is configured to project an image beam (IL) toward a projection surface (PS). The light sensor (200) is configured to sense at least one of a background beam (BL) and the image beam (IL) reflected by the projection surface and obtaining chromaticity information (CI). The control unit (300) is electrically connected to the projection device (100), and configured to control the image beam (IL) projected by the projection device (100). The arithmetic unit (400) is electrically connected to the control unit (300) and the light sensor (200). The arithmetic unit (400) is configured to generate an adjustment signal (AS) according to the chromaticity information (CI). The control unit (300) is configured to adjust a color temperature, a brightness, and a color gamut of the image beam (IL) according to the adjustment signal (AS). A calibration method of the projection system is also proposed.

## Description

This application claims the priority benefit of U.S. provisional applications serial no. 63/393,239, filed on July 29, 2022 and China application serial no. 202211190384.9, filed on September 28, 2022.

### BACKGROUND

### Technical Field

The invention relates to an optical system and a calibration method thereof, and more particularly, to a projection system and a calibration method thereof.

### Description of Related Art

The current projection system adopts a photosensitive element or a light sensor, so that the image beam projected by the projection system may be modulated relative to ambient light. However, most of the current projection systems solve the issue of adapting to ambient light by adjusting brightness or contrast of the image beam, which may result in the issue of over exposure or grayscale saturation.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

It is an object of the invention provides a projection system and a calibration method thereof that may modulate an image beam according to the change of an ambient beam under the condition of maintaining good image quality.

Other objects and advantages of the invention may be further understood from the technical features disclosed in the invention.

The object is solved by the features of the independent claims. Preferred embodiments are given in the dependent claims,

In order to achieve one or a portion or all of the above or other objects, an embodiment of the invention provides a projection system including a projection device, a light sensor, a control unit, and an arithmetic unit. The projection device is configured to project an image beam toward a projection surface. The light sensor is configured to sense at least one of a background beam and the image beam reflected by the projection surface, and configured to obtain chromaticity information. The control unit is electrically connected to the projection device for controlling the image beam projected by the projection device. The arithmetic unit is electrically connected to the control unit and the light sensor. The arithmetic unit is configured to generate an adjustment signal according to the chromaticity information. The control unit is configured to adjust a color temperature, a brightness, and a color gamut of the image beam according to the adjustment signal.

In one or more embodiments of the invention, the background beam may include at least one of an ambient beam and the ambient beam reflected by the projection surface.

In one or more embodiments of the invention, a projection direction of the image beam projected by the projection device may be opposite to a light sensing direction of the light sensor.

In one or more embodiments of the invention, the chromaticity information obtained by the light sensor according to the background beam is may be a first RGB value.

In one or more embodiments, the arithmetic unit may be configured to calculate a first chromaticity coordinate value according to the first RGB value.

In one or more embodiments of the invention, the control unit may be configured to make the projection device to output a preset all-white projection beam according to an original preset parameter.

In one or more embodiments of the invention, the light sensor may obtain the chromaticity information according to the background beam and the preset all-white projection beam reflected by the projection surface via the light sensor.

In one or more embodiments of the invention, the chromaticity information may be a second RGB value of the background beam superimposed on the preset all-white projection beam.

In one or more embodiments of the invention, the arithmetic unit may be configured to set an RGB depletion ratio of the preset all-white projection beam according to the first RGB value and the second RGB value, and generating the adjustment signal according to the RGB depletion ratio, so that the control unit adjusts the color temperature and the brightness of the image beam.

In one or more embodiments of the invention, the arithmetic unit may be configured to generate the adjustment signal according to the first chromaticity coordinate value of the background beam, so that the control unit may adjust a color gamut of the projection beam, and the projection beam may become an adjusted projection beam.

In one or more embodiments of the invention, a plurality of chromaticity coordinate values of the adjusted projection beam during different timing sequences may all fall within one of a plurality of target color gamuts.

In one or more embodiments of the invention, the larger the first RGB value of the background beam, the larger an area of one of the target color gamuts on a chromaticity coordinate.

In one or more embodiments of the invention, the projection device may include a first light source, a second light source, and a third light source respectively configured to provide a first color beam, a second color beam, and a third color beam.

In one or more embodiments of the invention, the image beam may include at least one of the first color beam, the second color beam, and the third color beam.

In one or more embodiments of the invention, during a first timing sequence, the control unit may be configured to adjust the first color beam according to the adjustment signal.

In one or more embodiments of the invention, during a second timing sequence, the control unit may be configured to adjust the second color beam according to the adjustment signal.

In one or more embodiments of the invention, during a third timing sequence, the control unit may be configured to adjust the third color beam according to the adjustment signal, so that the chromaticity information obtained by the light sensor may be a target brightness and a target color temperature.

In one or more embodiments of the invention, the projection device may include a first light source, a second light source, and a third light source respectively configured to provide a first color beam, a second color beam, and a third color beam.

In one or more embodiments of the invention, the image beam may include at least one of the first color beam, the second color beam, and the third color beam.

In one or more embodiments of the invention, during a first timing sequence, the first color beam may be continuously emitted, and the control unit may be configured to adjust the second color beam and the third color beam according to the adjustment signal.

In one or more embodiments of the invention, during a second timing sequence, the second color beam may be continuously emitted, and the control unit may be configured to adjust the first color beam and the third color beam according to the adjustment signal.

In one or more embodiments of the invention, during a third timing sequence, the third color beam may be continuously emitted, and the control unit may be configured to adjust the first color beam and the second color beam according to the adjustment signal, so that the chromaticity information obtained by the light sensor conforms to a target color gamut.

In order to achieve one or a portion or all of the above objects or other objects, an embodiment of the invention further provides a calibration method of a projection system, including the following steps. An image beam is projected toward a projection surface via a projection device. At least one of a background beam and the image beam reflected by the projection surface is sensed and chromaticity information is obtained by a light sensor. An adjustment signal is generated via an arithmetic unit according to the chromaticity information. A color temperature, a brightness, and a color gamut of the image beam are adjusted via a control unit according to the adjustment signal.

In one or more embodiments of the invention, the calibration method of the projection system may further include the following steps. When the projection device is in an off state, the chromaticity information obtained by the light sensor according to the background beam may be a first RGB value. A first chromaticity coordinate value may be calculated via the arithmetic unit according to the first RGB value.

In on or more embodiments of the invention, the calibration method of the projection system may further include the following steps. A preset all-white projection beam may be output via the projection device via the control unit according to an original preset parameter. The chromaticity information may be obtained according to the background beam and the preset all-white projection beam reflected by the projection surface via the light sensor, and the chromaticity information may be a second RGB value of the background beam superimposed on the preset all-white projection beam.

In one or more embodiments of the invention, the calibration method of the projection system may further include the following steps. An RGB depletion ratio of the preset all-white projection beam may be set according to the first RGB value and the second RGB value and the adjustment signal may be generated according to the RGB depletion ratio via the arithmetic unit. The color temperature and the brightness of the image beam may be adjusted via the control unit according to the adjustment signal.

In one or more embodiments of the invention, the calibration method of the projection system may further include the following steps. The adjustment signal may be generated via the arithmetic unit according to the first chromaticity coordinate value of the background beam. A color gamut of the projection beam may be adjusted via the control unit according to the adjustment signal, and the projection beam may become an adjusted projection beam, wherein a plurality of chromaticity coordinate values of the adjusted projection beam during different timing sequences may all fall within one of a plurality of target color gamuts.

In one or more embodiments of the invention, the image beam may include at least one of the first color beam, the second color beam, and the third color beam. The step of the control unit adjusting the color temperature and the brightness of the image beam according to the adjustment signal may include the following steps. During a first timing sequence, the first color beam emitted by the projection device may be adjusted. During a second timing sequence, the second color beam emitted by the projection device may be adjusted. During a third timing sequence, the third color beam emitted by the projection device may be adjusted, wherein the chromaticity information obtained by the light sensor may be a target brightness and a target color temperature.

In one or more embodiments of the invention, the image beam may include at least one of the first color beam, the second color beam, and the third color beam. The step of the control unit adjusting the color gamut of the image beam according to the adjustment signal may include the following steps. During a first timing sequence, the first color beam may be continuously emitted, and the second color beam and the third color beam may be adjusted. During a second timing sequence, the second color beam may be continuously emitted, and the first color beam and the third color beam may be adjusted. During a third timing sequence, the third color beam may be continuously emitted, and the first color beam and the second color beam may be adjusted, wherein the chromaticity information obtained by the light sensor may conform to the target color gamut.

Based on the above, in an embodiment of the invention, the projection system and the calibration method thereof adjust the color temperature, the brightness, and the color gamut of the image beam according to the chromaticity information, wherein the chromaticity information is obtained according to at least one of a background beam and the image beam reflected by the projection surface, so that the color temperature of the image beam may be controlled within the target color temperature, and the chromaticity coordinate value of the image beam may be controlled to fall within the target color gamut. Compared with adjusting brightness or contrast of the image beam merely according to the ambient light, the projection system of an embodiment of the invention may modulate the image beam according to the change of the ambient beam under the condition of maintaining good image quality.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a projection system of an embodiment of the invention.
FIG. 2 is a schematic diagram of a first light source, a second light source, and a third light source in a projection device of a projection system according to an embodiment of the invention.
FIG. 3 is a schematic diagram of adjusting the brightness and the color temperature of an image beam via a projection system according to an embodiment of the invention.
FIG. 4 is a schematic diagram of current coordinate values and target coordinate values.
FIG. 5 is a schematic diagram of adjusting the brightness and the color gamut of an image beam via a projection system according to an embodiment of the invention.
FIG. 6 is a schematic diagram of different target color gamuts.
FIG. 7 is a flowchart of a calibration method of a projection system of an embodiment.
FIG. 8 is a flowchart of calculating a first chromaticity coordinate value by a calibration method of a projection system according to an embodiment of the invention.
FIG. 9 is a flowchart of calculating a second chromaticity coordinate value via a calibration method of a projection system according to an embodiment of the invention.
FIG. 10 is a flowchart of a calibration method of a projection system according to an embodiment of the invention to set the RGB depletion ratio of a preset all-white projection beam to adjust the color temperature and the brightness of the image beam.
FIG. 11 is a flowchart of adjusting the color gamut of a projection beam via a calibration method of a projection system according to an embodiment of the invention.
FIG. 12 is a flowchart of adjusting the brightness and the color temperature of a projection beam via a calibration method of a projection system according to an embodiment of the invention.
FIG. 13 is a flowchart of adjusting the color gamut of a projection beam via a calibration method of a projection system according to another embodiment of the invention.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention may be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

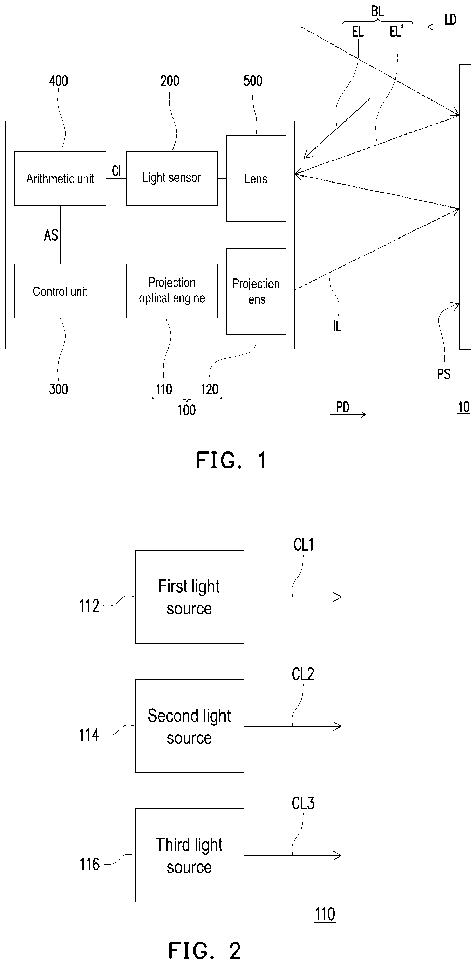

FIG. 1 is a schematic diagram of a projection system according to an embodiment of the invention. Please refer to FIG. 1, an embodiment of the invention provides a projection system 10 including a projection device 100, a light sensor 200, a control unit 300, and an arithmetic unit 400.

In the embodiment, the projection device 100 is configured to project an image beam IL to a projection surface PS. The projection device 100 is, for example, a projector. The projection surface PS is, for example, a projection screen, a wall, etc. The projection device 100 includes a projection optical engine 110 and a projection lens 120. The projection optical engine 110 is configured to generate the image beam IL. The projection optical engine 110 may include, for example, a light source module (not shown) and a light valve (not shown). The light source module is configured to provide an illumination beam (not shown). The light source module may be formed by at least one light source, wavelength conversion element (phosphor wheel), uniform light element (rod), light filter element (filter wheel), and at least one light guide element, and is configured to provide light beams with different wavelengths as the source of the illumination beam. The light source may be a light-emitting diode (LED) or a laser diode (LD). The light valve is disposed on the transmission path of the illumination beam and configured to convert the illumination beam into the image beam IL. The light valve is, for example, a reflective light modulator such as a liquid crystal on silicon panel (LCoS panel) or a digital micro-mirror device (DMD). In some embodiments, the light valve may also be a transmissive light modulator such as a transparent liquid-crystal panel, an electro-optical modulator, a magneto-optic modulator, or an acousto-optic modulator (AOM). The projection lens 120 is disposed on the transmission path of the image beam IL and configured to project the image beam IL to the projection surface PS. The projection lens 120 includes, for example, a combination of one or a plurality of optical lenses having a diopter, including, for example, various combinations of a non-planar lens such as a biconcave lens, a lentic-ular lens, a concave-convex lens, a convex-concave lens, a plano-convex lens, a plano-concave lens, and the like. In an embodiment, the projection lens 120 may also include a flat optical lens projecting the image beam IL from the light valve to the projection surface PS in a reflective manner.

In the embodiment, the light sensor 200 is, for example, a photo sensor capable of obtaining the intensity (brightness) of the three primary colors of RGB, the light sensor 200 is configured to sense at least one of a background beam BL and the image beam IL reflected by the projection surface PS, which means the light sensor 200 is configured to sense the background beam BL and/or the image beam IL reflected by the projection surface PS, and the light sensor 200 is configured to obtain chromaticity information CI. The background beam BL includes at least one of an ambient beam EL and an ambient beam EL' reflected by the projection surface PS. In the embodiment, the projection system 10 may further include a lens 500 disposed on the transmission path of the image beam IL reflected by the projection surface PS, and disposed between the light sensor 200 and the projection surface PS, and the lens 500 is configured to focus the background beam BL and the image beam IL reflected by the projection surface PS on the sensing surface of the light sensor 200.

In the embodiment, the control unit 300 and/or the arithmetic unit 400 includes, for example, a microcontroller unit (MCU), a central processing unit (CPU), a microprocessor, a digital signal processor (DSP), a programmable controller, a programmable logic device (PLD), or other similar devices or a combination of the devices, and the invention is not limited thereto. Therefore, in an embodiment, the control unit 300 and the arithmetic unit 400 may be integrated into one unit or one device. Moreover, in an embodiment, each function of the control unit 300 and/or the arithmetic unit 400 may be implemented as a plurality of program codes. These program codes are stored in one memory, and the program codes are executed by the control unit 300 and/or the arithmetic unit 400. Or, in an embodiment, each function of the control unit 300 and/or the arithmetic unit 400 may be implemented as one or a plurality of circuits. The invention does not limit whether each function of the control unit 300 or the arithmetic unit 400 is implemented in a software or hardware form.

In the embodiment, the control unit 300 is electrically connected to the projection device 100 for controlling the image beam II, projected by the projection device 100. The arithmetic unit 400 is electrically connected to the control unit 300 and the light sensor 200. The arithmetic unit 400 is configured to generate an adjustment signal AS according to the chromaticity information CI. The control unit 300 is configured to adjust the color temperature, the brightness, and the color gamut of the image beam IL projected by the projection device 100 according to the adjustment signal AS.

In the embodiment, a projection direction PD of the image beam IL projected by the projection device 100 is opposite to a light sensing direction LD of the light sensor 200.

In the embodiment, the projection system 10 may have an original preset parameter (Rc, Gc, Be). The original preset parameter (Rc, Gc, Be) may be a calibration parameter of the projection device 100 before leaving the factory. The original preset parameter (Rc, Gc, Be) is, for example, the RGB parameter of a white light with the highest brightness of the projection device 100 under the condition of no ambient light when the color temperature of the projection beam IL obtained by an illuminometer (not shown) or a sensor (not shown) is the target color temperature (for example, 6500K). Specifically, the illuminometer or the sensor is disposed on the transmission path of the image beam IL projected from the projection lens 120, and is configured to sense the RGB value of the image beam IL, in order to know the difference between the RGB value of the projected image beam IL and the light source power when the projection optical engine 110 is set at the target color temperature. For example, the projection device 100 outputs an all-white projection beam IL with an RGB light source power ratio of 1:1:1. If the light source power of at least one light source of the projection optical engine 110 is attenuated, the color temperature and/or the color point of the all-white projection beam IL sensed by the illuminometer or the sensor is shifted. Therefore, the RGB light source power of the all-white projection beam IL needs to be adjusted individually, so that the color temperature of the preset all-white projection beam IL may be maintained at the target color temperature, and the RGB parameter of the preset all-white projection beam IL is the original preset parameter (Rc, Gc, Bc), so that the object of accurately adjusting color temperature may be achieved.

The following will describe in detail how the projection system 10 according to an embodiment of the invention adjusts the color temperature, the brightness, and the color gamut of the image beam IL.

In the embodiment, when the projection device 100 does not project the projection beam IL, the chromaticity information CI obtained by the light sensor 200 according to the background beam BL is a first RGB value (Re, Ge, Be). The arithmetic unit 400 is configured to calculate the first chromaticity coordinate value according to the first RGB value (Re, Ge, Be). Moreover, the control unit 300 may be configured to make the projection device 100 output the preset all-white projection beam IL according to the original preset parameter (Rc, Gc, Bc), and the chromaticity information CI is obtained according to the background beam BL and the preset all-white projection beam IL reflected by the projection surface PS via the light sensor 200, and the chromaticity information CI is the second RGB value (Rx, Gx, Bx) of the background beam BL superimposed on the preset all-white projection beam IL. The arithmetic unit 400 is configured to calculate the second chromaticity coordinate value according to the second RGB value (Rx, Gx, Bx). In the embodiment, the first chromaticity coordinate value and the second chromaticity coordinate value are, for example, coordinate values of brightness and the color temperature relative to the color space chromaticity diagram.

Referring to FIG. 2, FIG. 2 is a schematic diagram of a first light source, a second light source, and a third light source in a projection device of a projection system according to an embodiment of the invention. The projection optical engine 110 includes, for example, a first light source 112, a second light source 114, and a third light source 116 for respectively providing a first color beam CL1, a second color beam CL2, and a third color beam CL3. The first light source 112, the second light source 114, and the third light source 116 may be disposed in the light source module of the projection optical engine 110. The first color beam CL1, the second color beam CL2, and the third color beam CL3 may be, for example, red (R), green (G), and blue (B) beams, respectively. The image beam IL includes at least one of the first color beam CL1, the second color beam CL2, and the third color beam CL3.

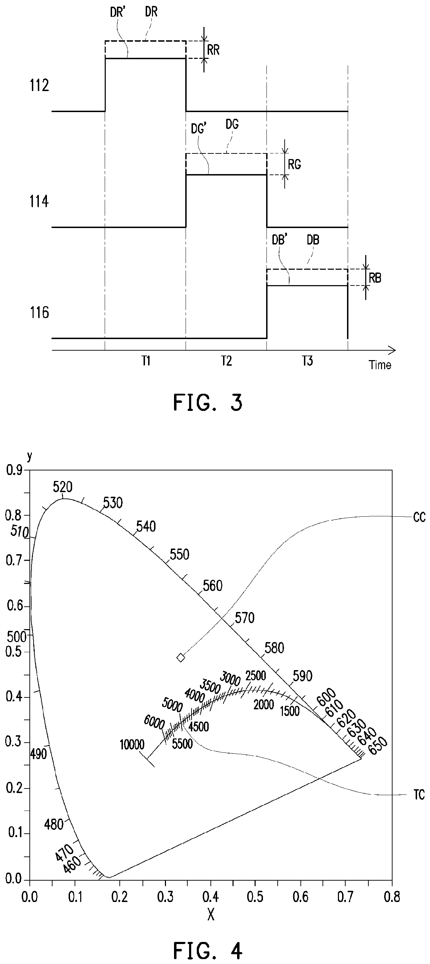

Referring to FIG. 3, FIG. 3 is a schematic diagram of adjusting the brightness and the color temperature of an image beam via a projection system according to an embodiment of the invention. The arithmetic unit 400 is configured to set an RGB depletion ratio (Ra, Ga, Ba) of the preset all-white projection beam IL according to the first RGB value (Re, Ge, Be) and the second RGB value (Rx, Gx, Bx), and generate the adjustment signal AS (shown in FIG. 1) according to the RGB depletion ratio (Ra, Ga, Ba), so that the control unit 300 adjusts the color temperature and the brightness of the image beam IL, and then the chromaticity information CI obtained by the light sensor is the target brightness and the target color temperature. In the embodiment, the RGB depletion ratio (Ra, Ga, Ba) is the ratio of the RGB depletion value (RR, RG, RB) of FIG. 3. The RR value is the depletion value of the first light source 112, the RG value is the depletion value of the second light source 114, and the RB value is the depletion value of the third light source 116. The depletion value may be, for example, a depletion current value or a depletion light source power value. In the embodiment, the adjustment signal AS may include, for example, the adjustment ratio of the light source power or current output by the first light source 112, the second light source 114, and the third light source 116.

More specifically, in FIG. 3, the horizontal axis represents time, and the vertical axis represents the luminous intensity of the first color beam CL1, the second color beam CL2, and the third color beam CL3 emitted by the first light source 112, the second light source 114, and the third light source 116. The luminous intensity may be represented, for example, by the output current or light source power. The luminous intensity output by the first light source 112, the second light source 114, and the third light source 116 of the preset all-white projection beam IL corresponds to the DR value, the DG value, and the DB value in FIG. 3, respectively. The RGB depletion values correspond to the RR value, the RG value, and the RB value in FIG. 3, respectively. The RGB values corresponding to the adjusted preset all-white projection beam IL correspond to the DR' value, the DG' value, and the DB' value in FIG. 3 respectively. During a first timing sequence T1, the control unit 300 is configured to adjust the first color beam CL1 according to the adjustment signal AS, and the DR value corresponding to the first color beam CL1 is adjusted to the DR' value. During a second timing sequence T2, the control unit 300 is configured to adjust the second color beam CL2 according to the adjustment signal AS, and the DG value corresponding to the second color beam CL2 is adjusted to the DG' value. During a third timing sequence T3, the control unit 300 is configured to adjust the third color beam CL3 according to the adjustment signal AS, and the DB value corresponding to the third color beam CL3 is adjusted to the DB' value. The chromaticity information CI obtained by the light sensor 200 is the target brightness and the target color temperature. In the embodiment, the individual first light source 112, second light source 114, and third light source 116 are configured to control the shift of the color point, and there is only one color light output during each timing sequence, so as to achieve the effect of adjusting brightness and the color temperature. Accordingly, the adjusted preset all-white projection beam IL may be adjusted with the brightness of the background beam BL to avoid visual damage caused by outputting a projection light beam IL that is too bright in a dim environment.

Referring to FIG. 4, FIG. 4 is a schematic diagram of current coordinate values and target coordinate values. The horizontal axis x and the vertical axis y in FIG. 4 represent chromaticity coordinates. For example, the second chromaticity coordinate value may correspond to the current coordinate value CC of FIG. 4, and the adjusted preset all-white projection beam IL may correspond to the target coordinate value TC in FIG. 4. The RGB value of the target coordinate value TC of the projection beam IL conforming to target color temperature and the target brightness is (Rt, Gt, Bt), and (Rt, Gt, Bt)=f((Re, Ge, Be), (Rx, Gx, Bx), (Rc, Gc, Bc), (Ra, Ga, Ba)), wherein (Re, Ge, Be) corresponds to the first RGB value, (Rx, Gx, Bx) corresponds to the second RGB value, (Rc, Gc, Be) corresponds to the RGB value corresponding to the original preset parameter, and (Ra, Ga, Ba) corresponds to the RGB depletion value (RR, RG, RB).

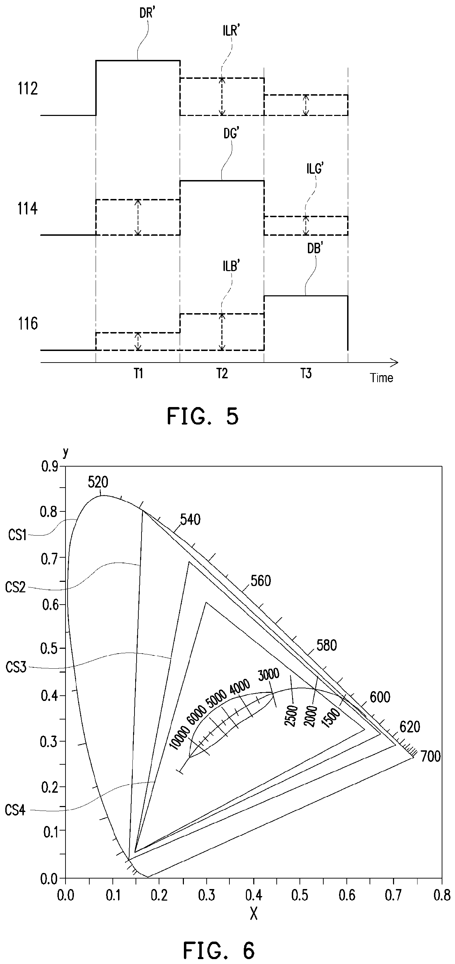

FIG. 5 is a schematic diagram of adjusting the brightness and the color gamut of an image beam via a projection system according to an embodiment of the invention. FIG. 6 is a schematic diagram of different target color gamuts. The horizontal axis x and the vertical axis y in FIG. 6 represent chromaticity coordinates. Referring to FIG. 1, FIG. 5, and FIG. 6, in the embodiment, the arithmetic unit 400 is configured to generate the adjustment signal AS according to the first chromaticity coordinate value of the background beam BL, so that the control unit 300 adjusts the color gamut of the projection beam IL, and the projection beam IL becomes an adjusted projection beam IL, wherein the chromaticity coordinate value of the adjusted projection beam IL during different timing sequences T1, T2, and T3 all fall within one of a plurality of target color gamuts CS1, CS2, CS3, and CS4. The target color spaces CS1, CS2, CS3, CS4 may be CIE 1931 color space, UHDTV (BT.2020) color space, DCI-P3 color space, HDTV (Rec.709) color space, respectively. The invention is not limited to the four target color gamuts CS1, CS2, CS3, and CS4.

As shown in FIG. 5, in FIG. 5, the horizontal axis represents time, and the vertical axis represents the luminous intensity of the first color beam CL1, the second color beam CL2, and the third color beam CL3 emitted by the first light source 112, the second light source 114, and the third light source 116. During the first timing sequence T1, the first color beam CL1 is continuously emitted, the luminous intensity corresponding to the first color beam CL1 is the DR' value, and the control unit 300 is configured to adjust the luminous intensity of the second color beam CL2 and the third color beam CL3 according to the adjustment signal AS. During the second timing sequence T2, the second color beam CL2 is continuously emitted, the luminous intensity corresponding to the second color beam CL2 is the DG' value, and the control unit 300 is configured to adjust the first color beam CL1 and the third color beam CL3 according to the adjustment signal AS. During the third timing sequence T3, the third color beam CL3 is continuously emitted, the luminous intensity corresponding to the third color beam CL3 is the DB' value, and the control unit 300 is configured to adjust the first color beam CL1 and the second color beam CL2 according to the adjustment signal AS. Thereby, the chromaticity information CI obtained by the light sensor 200 conforms to at least one of the plurality of target color gamuts CS1, CS2, CS3, and CS4.

In more detail, the DR' value, the DG' value, and the DB' value shown in FIG. 5 may respectively correspond to the RGB value corresponding to the adjusted preset all-white projection beam IL. Taking the timing sequence T2 as an example, the second color beam CL2 is the main emission color, and the first color beam CL1 and the third color beam CL3 are the auxiliary colors. The luminous intensity corresponding to the second color beam CL2 is the DG' value, the luminous intensity corresponding to the first color beam CL1 is adjusted from the original non-emitting light to the ILR' value, and the luminous intensity corresponding to the third color beam CL3 is adjusted from the original non-emitting light to the ILB' value. By outputting a plurality of color lights by color mixing, the luminous ratio of the first color beam CL1, the second color beam CL2, and the third color beam CL3 corresponding to each of the different timing sequences T1, T2, and T3 is adjusted. That is, by driving the current intensity of the first light source 112, the second light source 114, and the third light source 116 via the control unit 300, the luminous intensity of the auxiliary color in each of the timing sequences T1, T2, and T3 may be adjusted to control the color mixing range, so as to achieve the effect of adjusting color gamut.

In the embodiment, the larger the first RGB value of the background beam BL, the larger an area of one of the target color gamuts CS1, CS2, CS3, and CS4 on the chromaticity coordinate. That is to say, the maximum brightness of the projection beam IL is matched with the brightness of the background beam BL so that the viewer has a comfortable experience. When the brightness of the background beam BL is lower, the maximum brightness of the projection beam IL is lower. In contrast, when the brightness of the background beam BL is higher, the maximum brightness of the projection beam IL is raised. For example, in a dark environment, the target color gamut CS2 corresponding to the BT.2020 color space is too vivid, which may lead to an irritating and uncomfortable viewing feeling. Therefore, the color gamut range may be reduced, and the fatigue of viewing may be relieved.

In short, after the first RGB value and the second RGB value are obtained by the light sensor 200, the color temperature of the image beam IL and the corresponding chromaticity coordinate value are gradually adjusted in the timing sequences T1, T2, and T3 and in stages, so that the color temperature of the image beam IL is adjusted to the target color temperature, and the chromaticity coordinate value corresponding to the image beam IL falls within one of the target color gamuts CS1, CS2, CS3, and CS4. Moreover, when the color temperature of the image beam IL and the corresponding chromaticity coordinate value are adjusted, the brightness of the image beam IL is also adjusted at the same time.

Based on the above, in an embodiment of the invention, the projection system 10 senses the background beam BL and the image beam IL reflected by the projection surface PS via the light sensor 200 to obtain the chromaticity information CI, and adjusts the color temperature, the brightness, and the color gamut of the image beam IL according to the chromaticity information CI. Therefore, the color temperature of the image beam IL may be controlled at a target color temperature (e.g., 6500K), and the chromaticity coordinate value of the image beam IL may be controlled to fall within the target color gamuts CS1, CS2, CS3, and CS4. Compared with adjusting brightness or contrast, the projection system 10 of an embodiment of the invention may modulate the image beam IL for the change of the ambient beam EL and the color of the projection surface PS under the condition of maintaining good image quality.

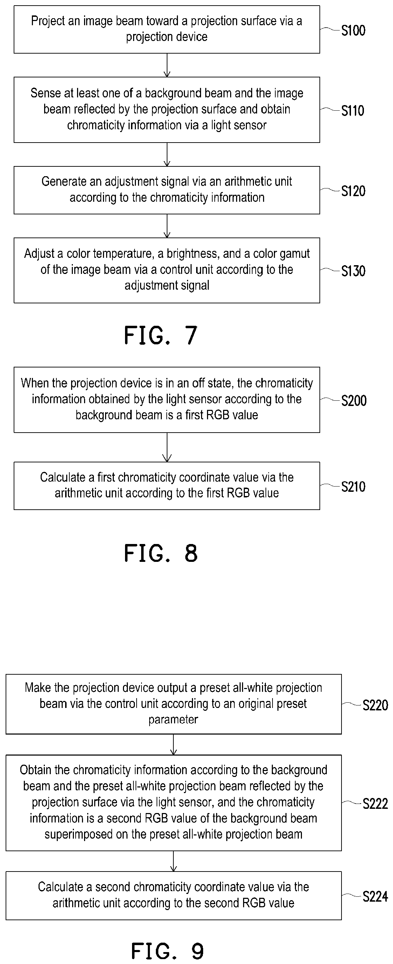

FIG. 7 is a flowchart of a calibration method of a projection system according to an embodiment of the invention. Referring to FIG. 7, an embodiment of the invention further provides a calibration method of the projection system 10 including the following steps. In step S100, the image beam IL is projected toward the projection surface PS via the projection device 100. In step S 110, at least one of the background beam BL and the image beam IL reflected by the projection surface PS is sensed and the chromaticity information CI is obtained by the light sensor 200. In step S120, the adjustment signal AS is generated via the arithmetic unit 400 according to the chromaticity information CI. In step S130, the color temperature, the brightness, and the color gamut of the image beam IL are adjusted via the control unit 300 according to the adjustment signal AS.

FIG. 8 is a flowchart of calculating a first chromaticity coordinate value via a calibration method of a projection system according to an embodiment of the invention. Referring to FIG. 8, in the embodiment, the calibration method of the projection system 10 further includes the following steps. In step S200, when the projection device 100 is in an off state, the chromaticity information CI obtained by the light sensor 200 according to the background beam BL is the first RGB value (Re, Ge, Be). The method of turning the projection device 100 into an off state is, for example, reducing the driving power of the light source (the first light source 112, the second light source 114, and the third light source 116) of the projection device 100 or turning off the light source, so that the projection image is completely black. In step S210, a first chromaticity coordinate value is calculated via the arithmetic unit 400 according to the first RGB value (Re, Ge, Be). The steps S200 and S210 may be completed in a short process when the projection system 10 is activated by manual control or switched from an external media input signal source (e.g., HDMI, RGB).

FIG. 9 is a flowchart of calculating a second chromaticity coordinate value via a calibration method of a projection system according to an embodiment of the invention. Referring to FIG. 9, in the embodiment, the calibration method of the projection system 10 further includes the following steps. In step S220, the preset all-white projection beam IL is output via the projection device 100 via the control unit 300 according to the original preset parameter (Rc, Gc, Bc). In step S222, the chromaticity information CI is obtained according to the background beam BL and the preset all-white projection beam IL reflected by the projection surface PS via the light sensor 200, and the chromaticity information CI is the second RGB value (Rx, Gx, Bx) of the background beam BL superimposed on the preset all-white projection beam IL. In step S224, the second chromaticity coordinate value is calculated via the arithmetic unit 400 according to the second RGB value.

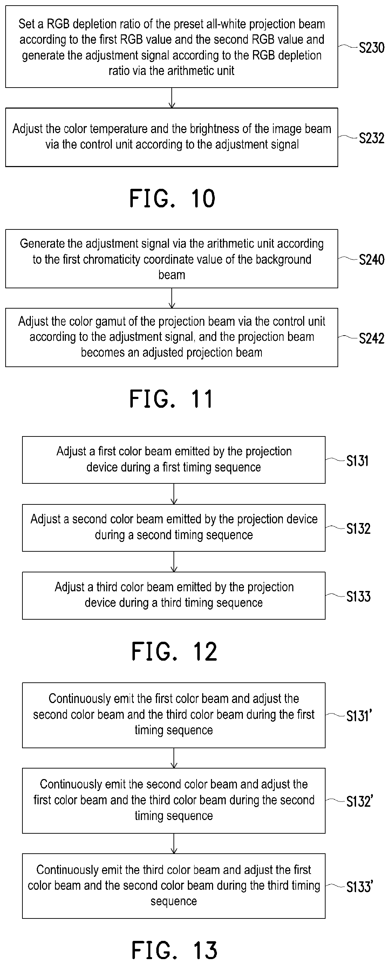

FIG. 10 is a flowchart of a calibration method of a projection system according to an embodiment of the invention to set the RGB depletion ratio of a preset all-white projection beam to adjust the color temperature and the brightness of an image beam. Referring to FIG. 10, in the embodiment, the calibration method of the projection system 10 further includes the following steps. In step S230, the RGB depletion ratio (Ra, Ga, Ba) of the preset all-white projection beam is set according to the first RGB value (Re, Ge, Be) and the second RGB value (Rx, Gx, Bx) and the adjustment signal AS is generated according to the RGB depletion ratio (Ra, Ga, Ba) via the arithmetic unit 400. In step S232, the color temperature and the brightness of the image beam IL are adjusted via the control unit 300 according to the adjustment signal AS. In an embodiment, the arithmetic unit 400 may determine the target brightness according to the RGB depletion ratio (Ra, Ga, Ba). The target color temperature may be selected by the user or determined by a preset method. The arithmetic unit 400 may convert the corresponding RGB value according to the chromaticity coordinate value of the target color temperature, and compare the RGB value corresponding to the target color temperature with the second RGB value to generate the adjustment signal AS, or the arithmetic unit 400 may also compare the chromaticity coordinate of the target color temperature with the second chromaticity coordinate value to generate the adjustment signal AS, so as to correct the color temperature of the image beam IL.

FIG. 11 is a flowchart of adjusting the color gamut of a projection beam via a calibration method of a projection system according to an embodiment of the invention. Referring to FIG. 11, in the embodiment, the calibration method of the projection system 10 further includes the following steps. In step S240, the adjustment signal AS is generated via the arithmetic unit 400 according to the first chromaticity coordinate value of the background beam BL. In step S242, the color gamut of the projection beam IL is adjusted via the control unit 300 according to the adjustment signal AS, wherein chromaticity coordinate values of the adjusted projection beam IL during different timing sequences T1, T2, and T3 all fall within one of the plurality of target color gamuts CS1, CS2, CS3, and CS4.

FIG. 12 is a flowchart of adjusting the brightness and the color temperature of a projection beam via a calibration method of a projection system according to an embodiment of the invention. Referring to FIG. 12, in the embodiment, step S130 of the control unit 300 adjusting the color temperature and the brightness of the image beam IL according to the adjustment signal AS may include the following steps. In step S131, during the first timing sequence T1, the first color beam CL1 emitted by the projection device 100 is adjusted. In step S132, during the second timing sequence T2, the second color beam CL2 emitted by the projection device 100 is adjusted. In step S133, during the third timing sequence T3, the third color beam CL3 emitted by the projection device 100 is adjusted, wherein the chromaticity information CI obtained by the light sensor 200 is target brightness and target color temperature.

FIG. 13 is a flowchart of adjusting the color gamut of a projection beam via a calibration method of a projection system according to another embodiment of the invention. Referring to FIG. 13, in the embodiment, step S130 of the control unit 300 adjusting the color gamut of the image beam IL according to the adjustment signal AS may include the following steps. In step S131', during the first timing sequence T1, the first color beam CL1 is continuously emitted, and the second color beam CL2 and the third color beam CL3 are adjusted. In step S132', during the second timing sequence T2, the second color beam CL2 is continuously emitted, and the first color beam CL1 and the third color beam CL3 are adjusted. In step S133', during the third timing sequence T3, the third color beam CL3 is continuously emitted, and the first color beam CL1 and the second color beam CL2 are adjusted, wherein the chromaticity information CI obtained by the light sensor 200 conforms to the target color gamuts CS1, CS2, CS3, and CS4. More specifically, the calibration process of the embodiment may be that after the steps of adjusting the brightness and the color temperature of the projection beam IL of FIG. 12 are performed first, the step of adjusting the color gamut of the projection beam IL of FIG. 13 is performed. That is to say, in FIG. 3 and FIG. 12, each of the timing sequences T1, T2, and T3 is output of pure color light, so as to adjust the brightness and the color temperature of the image beam IL. After the brightness and the color temperature are adjusted, the image beam IL is output in a mixed color light mode and the chromaticity coordinate of the image beam IL is made to fall within one of the target color gamuts CS1, CS2, CS3, and CS4, as shown in FIG. 5 and FIG. 13. In the timing sequence T1, the red light source is the main light source, and the green and blue light sources are the auxiliary light sources. The red light source outputs the red driving current wave, and the color mixing range is controlled by adjusting the green driving current wave of the green light source and the blue driving current wave of the blue light source, to achieve the effect of adjusting color gamut.

Based on the above, in an embodiment of the invention, the projection system and the calibration method thereof sense the background beam and the image beam reflected by the projection surface via the light sensor to obtain the chromaticity information, wherein the chromaticity information is obtained according to at least one of a background beam and the image beam reflected by the projection surface, and adjust the color temperature, the brightness, and the color gamut of the image beam according to the chromaticity information. Therefore, the color temperature of the image beam may be controlled at the target color temperature, and the chromaticity coordinate value of the image beam may be controlled to fall within the target color gamuts. Compared with the conventional art, most of the current projection systems solve the issue of adapting to ambient light by adjusting brightness or contrast of the image beam. The above current method only adjusts the brightness or contrast of the projection image as a whole, so that the recognition of the color level of the projection image is reduced, the RGB color gamut is limited, and the axis coordinate of color temperature may be shifted, resulting in the issue of over exposure or grayscale saturation. The resolution of the three primary colors of RGB is reduced, resulting in poor image quality, and the effects of the brightness of the projection image and the recognition of color levels may not be taken into account at the same time. However, the projection system of an embodiment of the invention may modulate the image beam according to the change of the ambient beam under the condition of maintaining good image quality.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc., following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A projection system (10), comprising:
a projection device (100) configured to project an image beam (IL) toward a projection surface (PS);
a light sensor (200) configured to sense at least one of a background beam (BL) and the image beam (IL) reflected by the projection surface (PS), and configured to obtain chromaticity information (CI);
a control unit (300) electrically connected to the projection device (100) and configured to control the image beam (IL) projected by the projection device (100); and
an arithmetic unit (400) electrically connected to the control unit (300) and the light sensor (200),
wherein the arithmetic unit (400) is configured to generate an adjustment signal (AS) according to the chrominance information (CI), and the control unit (300) is configured to adjust a color temperature, a brightness, and a color gamut of the image beam (IL) according to the adjustment signal (AS).

2. The projection system of claim 1, wherein the background beam (BL) comprises at least one of an ambient beam (EL) and the ambient beam (EL') reflected by the projection surface (PS).

3. The projection system of claim 1 or 2, wherein a projection direction (100) of the image beam (IL) projected by the projection device (100) is opposite to a light sensing direction of the light sensor (200).

4. The projection system of any one of the preceding claims, wherein the chromaticity information (CI) obtained by the light sensor (200) according to the background beam (BL) is a first RGB value, and the arithmetic unit (400) is configured to calculate a first chromaticity coordinate value according to the first RGB value.

5. The projection system of claim 4, wherein the control unit (300) is configured to make the projection device (100) output a preset all-white projection beam according to an original preset parameter, and the chromaticity information (CI) obtained by the light sensor (200) according to the background beam (BL) and the preset all-white projection beam reflected by the projection surface (PS) is a second RGB value of the background beam (BL) superimposed on the preset all-white projection beam,
preferably the arithmetic unit (400) is configured to set an RGB depletion ratio of the preset all-white projection beam according to the first RGB value and the second RGB value, and generate the adjustment signal (AS) according to the RGB depletion ratio, so that the control unit (400) is configured to adjust the color temperature and the brightness of the image beam (IL).

6. The projection system of claim 4 or 5, wherein the arithmetic unit (400) is configured to generate the adjustment signal (AS) according to the first chromaticity coordinate value of the background beam (BL), so that the control unit (400) is configured to adjust a color gamut of the projection beam, and the projection beam becomes an adjusted projection beam, wherein a plurality of chromaticity coordinate values of the adjusted projection beam during different timing sequences all fall within one of a plurality of target color gamuts; and/or the larger the first RGB value of the background beam, the larger an area of the one of the plurality of target color gamuts on a chromaticity coordinate.

7. The projection system of any one of the preceding claims, wherein the projection device (100) comprises a first light source (112), a second light source (114), and a third light source (116) respectively configured to provide a first color beam (CL1), a second color beam (CL2), and a third color beam (CL3), the image beam (IL) comprises at least one of the first color beam (CL1), the second color beam (CL2), and the third color beam (CL3), during a first timing sequence (T1), the control unit (300) is configured to adjust the first color beam (Cl1) according to the adjustment signal (AS), during a second timing sequence (T2), the control unit (300) is configured to adjust the second color beam (Cl2) according to the adjustment signal (AS), and during a third timing sequence (T3), the control unit (300) is configured to adjust the third color beam (Cl3) according to the adjustment signal (AS), so that the chromaticity information (CI) obtained by the light sensor (200) is a target brightness and a target color temperature.

8. The projection system of any one of the preceding claims 1-6, wherein the projection device (100) comprises a first light source (112), a second light source (114), and a third light source (116) respectively configured to provide a first color beam (CL1), a second color beam (CL2), and a third color beam (CL3), the image beam (IL) comprises at least one of the first color beam (CL1), the second color beam (CL2), and the third color beam (CL3), during a first timing sequence (T1), the first color beam (Cl1) is continuously emitted, and the control unit (300) is configured to adjust the second color beam (CL2) and the third color beam (Cl3) according to the adjustment signal (AS), during a second timing sequence (T2), the second color beam (Cl2) is continuously emitted, and the control unit (300) is configured to adjust the first color beam (CL1) and the third color beam (CL3) according to the adjustment signal (AS), and during a third timing sequence (T3), the third color beam (CL3) is continuously emitted, and the control unit (300) is configured to adjust the first color beam (CL1) and the second color beam (Cl2) according to the adjustment signal (AS), so that the chromaticity information obtained by the light sensor (200) conforms to a target color gamut.

9. A calibration method of a projection system, comprising:
projecting (S100) an image beam (IL) toward a projection surface (PS) via a projection device (100);
sensing (S110) at least one of a background beam (BL) and the image beam (IL) reflected by the projection surface (PS) and obtaining chromaticity information (CI) via a light sensor (200);
generating (S120) an adjustment signal (AS) via an arithmetic unit (400) according to the chromaticity information (CI); and
adjusting (S130) a color temperature, a brightness, and a color gamut of the image beam (IL) via a control unit (300) according to the adjustment signal (AS).

10. The calibration method of the projection system of claim 9, further comprising:
when the projection device (100) is in an off state, the chromaticity information (CI) obtained by the light sensor (200) according to the background beam (BL) is a first RGB value; and
calculating a first chromaticity coordinate value via the arithmetic unit (400) according to the first RGB value.

11. The calibration method of the projection system of claim 9 or 10, further comprising:
making the projection device (100) output a preset all-white projection beam via the control unit (300) according to an original preset parameter; and
obtaining the chromaticity information (CI) according to the background beam (BL) and the preset all-white projection beam reflected by the projection surface (PS) via the light sensor (200), and the chromaticity information (CI) is a second RGB value of the background beam (BL) superimposed on the preset all-white projection beam.

12. The calibration method of the projection system of claim 11, further comprising:
setting an RGB depletion ratio of the preset all-white projection beam according to the first RGB value and the second RGB value, and generating the adjustment signal (AS) according to the RGB depletion ratio via the arithmetic unit (400); and
adjusting the color temperature and the brightness of the image beam (IL) via the control unit (300) according to the adjustment signal (AS).

13. The calibration method of the projection system of any one of claims 9, 10, 11 or 12, further comprising:
generating the adjustment signal (AS) via the arithmetic unit (400) according to the first chromaticity coordinate value of the background beam (BL); and
adjusting a color gamut of the projection beam via the control unit (300) according to the adjustment signal (AS), and the projection beam becomes an adjusted projection beam, wherein a plurality of chromaticity coordinate values of the adjusted projection beam during different timing sequences all fall within one of a plurality of target color gamuts.

14. The calibration method of the projection system of any one of the preceding claims 9-13, wherein the image beam (IL) comprises at least one of a first color beam (CL1), a second color beam (CL2), and a third color beam (CL3), and the step of adjusting the color temperature and the brightness of the image beam (IL) via the control unit (300) according to the adjustment signal (AS) comprises:
adjusting a first color beam (CL1) emitted by the projection device (100) during a first timing sequence (T1);
adjusting a second color beam (CL2) emitted by the projection device (100) during a second timing sequence (T2); and
adjusting a third color beam (CL3) emitted by the projection device (100) during a third timing sequence (T3), wherein the chromaticity information (CI) obtained by the light sensor (200) is a target brightness and a target color temperature.

15. The calibration method of the projection system of any one of the preceding claims 9-13, wherein the image beam (IL) comprises at least one of a first color beam (CL1), a second color beam (CL2), and a third color beam (CL3), and the step of the control unit (300) adjusting the color gamut of the image beam (IL) according to the adjustment signal (AS) comprises:
continuously emitting the first color beam (CL1) and adjusting the second color beam (CL2) and the third color beam (CL3) during a first timing sequence (T1);
continuously emitting the second color beam (CL2) and adjusting the first color beam (CL1) and the third color beam (CL3) during a second timing sequence (T2); and
continuously emitting the third color beam (CL3) and adjusting the first color beam (CL1) and the second color beam (CL2) during a third timing sequence (T3), wherein the chromaticity information (CI) obtained by the light sensor (200) conforms to a target color gamut.
